# EUROPEAN PATENT APPLICATION

(11) **EP 1 455 276 A1**
(43) Date of publication of application: **08.09.2004**
(21) Application number: 03290546.5
(22) Date of filing: 06.03.2003
(51) Int. Cl.: G06F 11/14

(54) **Data processing system and method to restore a backup**

(71) Applicant: Hewlett-Packard Development Company, L.P., Houston, Texas 77070 (US)
(72) Inventor: Neuman, Paul, 38640 Claix (FR); Stephen, Yann, 38130 Echirolles (FR)
(74) Representative: Lloyd, Richard Graham

(57) **Abstract**

Embodiments of the present invention relate to a data processing system and method for protecting important or sensitive data. In preferred embodiments, the Windows registry contains registry data associated with such important or sensitive data and software is arranged to transverse the registry to locate the registry data. The located registry data might be used to at least alert the user the to existence of the data and, preferably, to create a copy of the important or sensitive data either in the form of a back-up copy, which can be used to restore the important or sensitive data, or in the form of a package, which can be used to install the data on another computer.

## Description

### Field of the Invention

The present invention relates to a data processing system and method and, more particularly, to such a system and method to backup data or transfer data between computers.

### Background to the Invention

The increase in sophistication of modern computer applications allows users to tailor the operation and use of those applications to meet their needs. For example, Internet Explorer is a web-browser that allows users to traverse the Internet and view web-pages. The user can add the URL of any interesting web-page to a *"favorites"* list. The *"favorites"* lists represents a collection of URLs of interesting web pages collated by the user over a relatively long period of time. The collection of URLs is stored on the hard drive, typically, in a directory called *"c:*/*windows*/*favorites".* Since such a list is usually compiled over a relatively long period of time and can become quite extensive, it would be virtually impossible to reconstruct the list of favourite URLs from memory if the list became corrupted or unusable. Internet Explorer, therefore, provides a way of saving the *"favorites"* list using the *"export"* menu option. This menu option produces a file containing a copy of all URLs contained within the favourites list. This file can be stored as a back-up file for later retrieval should the favourites list become corrupted. Also, the exported favourites list can be imported for use by Internet Explorer on another computer.

A further example of an application that allows users to create important data is the email application Outlook available from Microsoft Corporation. Outlook allows a user to collect or create a list of contacts, that is, a list of the names, addresses, telephone numbers, fax numbers, mobile numbers and other personal details of business contacts and friends. It can be appreciated that such a list may be greatly important to the user and that the user would like to take measures to prevent it becoming corrupted or, in the event of the user changing their computer, would like to ensure that the content of the contacts list is ported to the new computer.

The transfer of the *"favorites"* lists or the *"contacts"* details between computers or their export for safe keeping requires a relatively sophisticated user. Such a transfer or back-up may be beyond the capability of most users, even for relatively common place and easy to use programs such as Internet Explorer and Outlook.

There are many other applications that create important user data, some of which are not so visible to the user. Transferring these files between computers or creating a back-up of these files would be extremely difficult in the absence of specific detailed technical knowledge of the operation of the applications and the directories used by such applications.

The same considerations apply to user settings for applications. Internet Explorer may be configured in a great many ways. For example, the security settings can be selected to accommodate a number of different levels of security when traversing the Internet. Any of the initialisation of files may be, again, unknown to all but the most sophisticated of computer users.

A well-known email security application, PGP, uses public and private key encryption to facilitate the secure exchange of data. The public and private keys used by the software are crucial to the correct operation of the application. Changing computer system without also transferring the keys from the old computer system might lead to a position where the user is unable to view encrypted data due to the private key being unavailable. Again, unless a user remembers to transfer such keys, which requires a relatively sophisticated user, there is a danger that the keys will become lost and the risk that previously viewable encrypted data would be rendered unviewable would materialise.

Therefore, there exists the risk that important data, user files or configuration settings may become irrecoverably corrupted or may be overlooked when commissioning a new computer in an attempt to ensure that it reflects, to a desirable extent, the configuration of an old computer.

It is an object of embodiments of the present invention at least to mitigate some of the problems of the prior art.

### Summary of Invention

Accordingly, a first aspect of embodiments of the present invention provides a data processing system comprising first non-volatile storage storing a data structure; the data structure comprising an entry having an associated identifier and data identifying the location of a file comprising a copy of at least a user or software created data stored using second non-volatile storage; and first software comprising means to transverse the data structure to identify the associated identifier and means to retrieve and install the copy of the user or software created data in a predeterminable location of the first non-volatile storage; the associated identifier comprising data identifying the entry as containing the location data.

Advantageously, the sensitive or important data created by the users or software, or relating to the configuration of applications or software, can be readily identified, backed-up and restored or transferred between computers without the user being a relatively sophisticated computer user.

A second aspect of embodiments of the present invention provides a data processing system comprising first non-volatile storage storing user or software created data and first software comprising means to create and store a copy of the user or software created data using second non-volatile storage and means to create within a data structure, stored using the first non-volatile storage, an entry having an associated identifier and data identifying the location of the copy of the user or software created data on the second non-volatile storage; the associated identifier comprising data identifying the entry as containing the location data.

Suitably, a backup copy of important user data or important software created data can be stored remotely on some form of non-volatile storage for later retrieval or for use in transferring data between computers.

When a user changes their computer, there is the risk that they may overlook, or fail to transfer between computers, user data or system settings of application. Accordingly, a third aspect of embodiments of the present invention provides a data processing system comprising first non-volatile storage storing a data structure comprising an entry associated with user or software created data and first software comprising means operable to create a data package comprising a copy of the user or software created data and restoration data identifying at least one of a current storage location of the user or software created data on the first non-volatile storage or an association with an application.

A fourth aspect of embodiments of the present invention provides a data processing system comprising non-volatile storage and first software comprising means arranged to store a copy of user or software created data originating from further non-volatile storage of a different data processing system using said non-volatile storage and means to create within a data structure, stored using said non-volatile storage, an entry having an associated identifier and data identifying the location of the user or software created data on said non-volatile storage; the associated identifier comprising data identifying the entry as containing the location data.

A fifth aspect of embodiments of the present invention provides a data processing system comprising first non-volatile storage storing a data structure and user data, associated with a user application (local storage); a first application comprising code means arranged to store a copy of at least a portion of the user data using second non-volatile storage (backup storage) and means to create a record, within the data structure, containing data relating to at least the location of at least one of the user data and the copy of the at least a portion of the user data.

A sixth aspect of embodiments of the present invention provides a data processing method comprising the steps of storing, within a data structure stored using first non-volatile storage, location data identifying the location of both a copy of user or software created data and restoration data associated with a predetermined location of the user or software created data; the copy of the user or software created data and the restoration data being stored using second non-volatile storage; retrieving the copy of user or software created data and the restoration data using the location data and installing, on the first non-volatile storage, the user or software created data at the predeterminable location determined by the restoration data.

A still further aspect of embodiments of the present invention provides a data processing method comprising the steps of storing, within a data structure stored using first non-volatile storage, location data identifying the location of both a copy of user or software created data and restoration data associated with a predetermined location of the user or software created data; the copy of the user or software created data and the restoration data being stored using second non-volatile storage; retrieving the copy of the user or software created data and the restoration data using the location data and installing, on third non-volatile storage, the user or software created data at the predeterminable location determined by the restoration data.

### Brief Description of the Drawings

Embodiments of the present invention will now be described, by way of example only, with reference to the accompanying figures in which:
figure 1 illustrates an embodiment of a data processing system;
figure 2a shows a portion of a data structure used by embodiments of the present invention;
figure 2b depicts a screen presented by back-up and restoration software used to create registry entries;
figure 3 illustrates a flowchart for creating entries in the data structure shown in figure 2a;
figure 4 depicts a flowchart of a file restoration process;
figure 5 shows a flowchart for processing sensitive or important data;
figure 6 illustrates a flowchart of a process for installing sensitive or important data on a new computer; and
figure 7 shows the process for installing a new application on a computer system.

### Description of the Preferred Embodiments

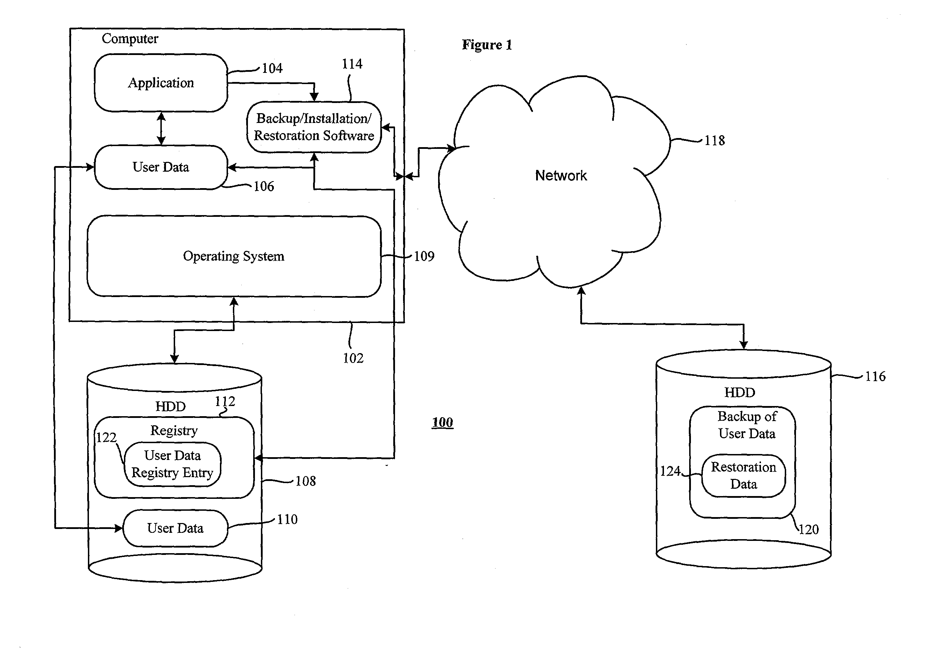

Figure 1 shows a data processing system 100 comprising a computer system 102. In the illustrated embodiment, the computer system 102 runs an application 104, which produces user data 106. The application 104 may be, for example, Internet Explorer or Outlook and the user data 106 may represent URLs of the *''favorites''* list of Internet Explorer or *"contacts"* data for use by Outlook. The computer system 102 is arranged to be able to store applications and associated data on an HDD 108. Typically, a copy 110 of the user data 106 will be stored on the HDD 108 and retrieved by the application 104 when needed.

The illustrated computer system 102 may run an operating system 109 such as, for example, a version of Windows, available from Microsoft Corporation. The Windows operating system 109 uses a registry 112 to assist in the smooth running of the computer system 102. The registry 112 is also stored on the HDD 108.

The computer system 102 also comprises back-up and restoration software 114 for performing back-up of the user data 106 or the copy of that user data 110. Any such back-up may be implemented using locally accessible non-volatile storage (not shown) or remotely accessible non-volatile storage such as, for example, a network HDD 116 that is accessible via a communication network 118. The back-up HDD 116 is illustrated as containing a back-up copy of the user data 120.

The back-up and restoration software 114 reads a registry entry 122, created during installation of the application 104, associated with the user data 106. The user data registry entry 122 comprises an identifier (not shown) that is recognisable by the back-up and restoration software 114. The user data registry entry 122 also comprises data associated with the back-up of the user data 120. That data provides an indication of the file name and location of the back-up copy of the user data 120 to allow the back-up copy 120 to be retrieved and restored in the event of failure or corruption of the user data 106 or the copy of the user data 110 stored on the HDD 108.

The back-up copy of the user data 120 also comprises restoration data 124. The restoration data 124 provides an indication of where the user data 120 should be stored in the file structure (not shown) used by the operating system 109. In preferred embodiments, the restoration data 124 comprises an indication of the drive name and associated path to which the back-up of the user data 120 should be restored.

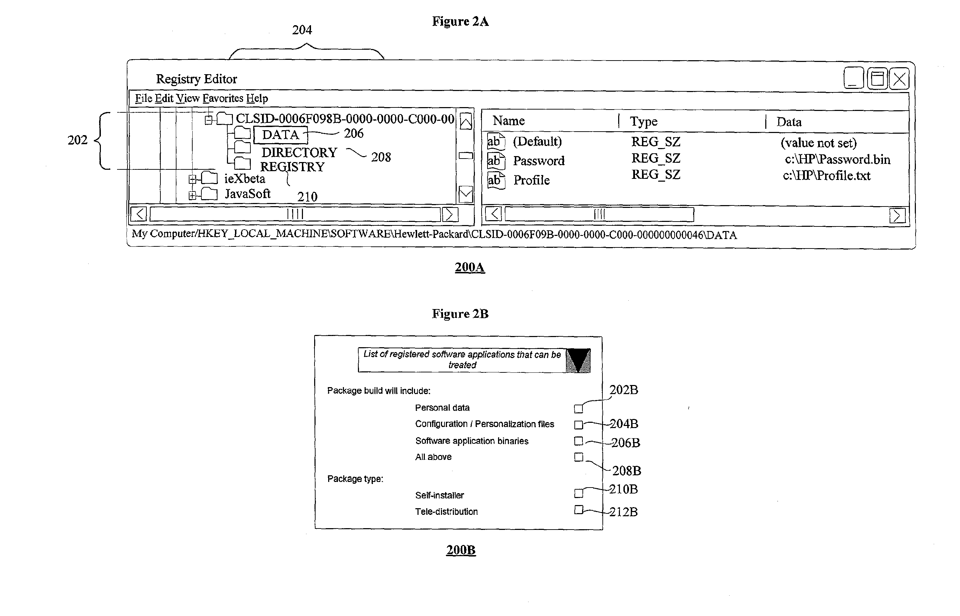

Referring to figure 2a, there is shown a portion 200A of the operating system registry 112 according to an embodiment The registry 112 is illustrated as containing the user data registry entry 122 associated with the user data 106 created using the application 104. The registry entry 122 comprises a unique registry ID 204. In the illustrated example, the unique registry ID is *"CLSID - 0006".* The ID 204 allows the back-up and restoration software 114 to identify registry entries relating to data that is important to the user or software. Preferably, the unique registry ID might also comprise an indicated of the categories of associated data that is important to the user or software. In the illustrated example, the registry entry 122 comprises a data key 206, a directory key 208 and a registry key 210. The data key 206 contains the name of the back-up copy of the user data or user file. The directory key 208 contains the full path name of the file or files identified under the data key 206. The registry key 210 contains a list of registry keys associated with the back-up file, the user data or user file or the application used to create the user data or user application.

In preferred embodiments, such a combination of elements represents an embodiment of a data structure entry. In the case where the data structure is the Windows registry, such a collection of elements is referred to as a registry entry.

In general terms, as will be appreciated by one skilled in the art, the registry is a central hierarchical database used in Microsoft Windows 9x, Windows CE, Windows NT, Windows 2000 and Windows XP. It stores information used to configure the system for one or more users, applications and hardware devices. The registry contains information that Windows uses during operation, such as profiles for each user, the applications installed on the computer and the types of documents that each can create, property sheet settings for folders and application icons, data on hardware that exists within the system, and which ports are being used.

Referring to figure 2b, there is shown a screen 200B presented by the back-up and restoration software 114 in producing the back-up file 120 and restoration data 124. The screen 200B allows the user to select, in the illustrated embodiment, a number of features or components intended to form part of the back-up file. These components include, for example, the selection of personal data via a corresponding check box 202B, the selection of configuration or personal files via a corresponding check box 204B, the inclusion of software application binaries via a corresponding check box 206B and a check box 208B for the selection of all of the preceding three options.

Preferably, the screen 200B also presents two further options that govern the form of the back-up file produced by the back-up and restoration software 114. The options are a *"self-installer"* option 210B and a tele-distribution option 212B. The self-installer option 210B is used to instruct the back-up and restoration software 114 to produce an executable file which, when executed, will install the back-up copy of the user data in a location dictated by the associated restoration data 124. This feature will be typically selected when migrating data and applications from one computer to another computer. The tele-distribution option 212B is used to duplicate an application on multiple computer systems in a manner that is quicker than a standard install process. A centrally accessible backup copy of the application is created together with restoration data. The restoration data comprises an indication of where in the file system the application should be installed. The restoration data also comprises backup copies of the registry entries associated with that application. The backup copy of the registry entries are installed in the registry in the appropriate place when the backup copy of the application is installed on a new computer system. It will be appreciated that the success of the above may be influenced, to some extent, by the compatibility of the registries of the operating systems used by the computer systems.

In preferred embodiments, if neither of the package type options are selected, the default position is that a back-up copy is created in a predetermined back-up directory.

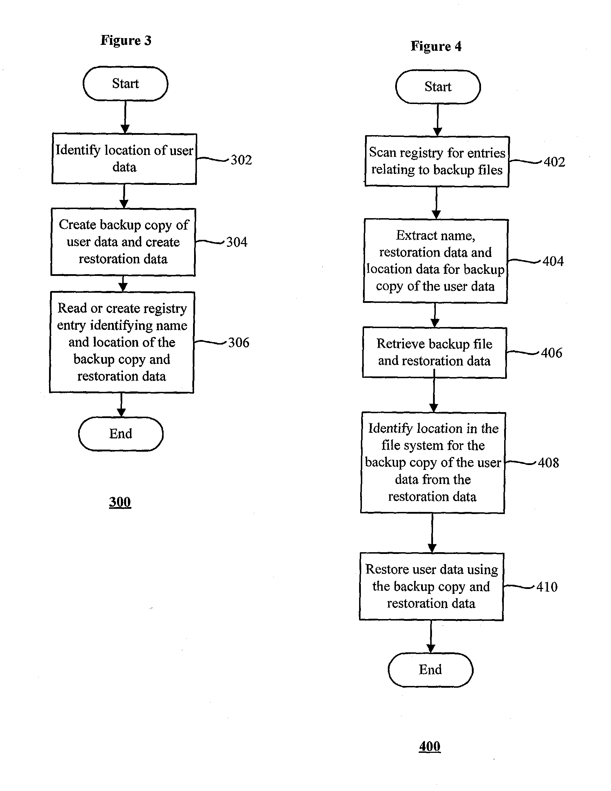

Referring to figure 3, there is shown a flowchart 300 of a process by which the back-up and restoration software 114 reads the user data registry entry 122 and creates the back-up copy of the user data 120. At step 302, the back-up and restoration software 114 identifies the location of the user data 110. Typically, in preferred embodiments, the location of the user data 110 will correspond to the file name and path of the copy of the user data 110. In step 304, the back-up and restoration software 114 creates the back-up copy of the user data 120, in a preferred embodiment, on the remote HDD 116. As indicated above, the back-up copy of the user data 120 also comprises restoration data 124, also created in step 304, that is used to restore the user data when appropriate. The restoration data 124 comprises the location data identified in step 302. The back-up and restoration software 114 creates or reads the registry entry 122 within the registry 112 corresponding to the user data in step 306. Therefore, the registry entry 122 can be used in future traversals of the registry 112 by the back-up and restoration software 114 to identify important user data.

Figure 4 shows a flowchart 400 of the process performed by the back-up and restoration sofware 114 to restore user data. At step 402, the back-up and restoration software 114 scans the registry 112 for entries relating to back-up files. The software 114 achieves this using the specific identifiers described above. Upon location of an entry such as, for example, register entry 122, the location of the back-up copy of the user data 120 and the corresponding restoration data 124 is determined at step 404. The location data (not shown) is used to retrieve the back-up of the user data 120 and the restoration data 124 at step 406. The retrieved restoration data 124 is used to identify the appropriate place within the file system (not shown) at which the back-up copy of the user data 120 should be stored to restore the user data at step 408. Having identified the appropriate location within the file system for the restoration, the user data 110 is restored or created using the back-up copy of the user data 120 at step 410.

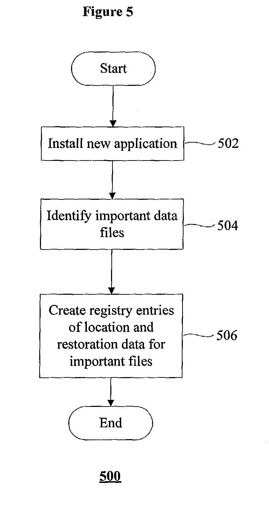

Referring to figure 5, there is shown a flowchart 500 of a process relating to the installation of a new application that will create user data. The new application is installed at step 502 in the conventional manner. The user, or the application being installed, informs the back-up and restoration 114 of the names and locations of user files or user data that have been, or that could potentially be, used by the new application at step 504. The back-up and restoration software 114, at step 506, creates registry entries identifying the location of the user data or user files created by, or that could be potentially created by, the application.

It will be appreciated that arranging for new applications, upon installation, to create appropriate register entries for files that may potentially contain user data reduces the risk that such user data will be lost in the event of corruption of the file or overlooked in the event of the user migrating to a new computer system.

Although the embodiments have been described with reference to the new application identifying the appropriate files to the back-up and restoration software 114, embodiments are not limited to such an arrangement. Embodiments can be realised in which the new application creates the registry entries, which will remove the need to involve the back-up and restoration software 114 in the creation of such registry entries.

Still further, the back-up and restoration software, or the new application itself, may create back-up and restoration files for storage on the HDD 116 and the registry entries would include information to that effect.

It will be appreciated that the back-up and restoration software 114 may be arranged periodically, or at predetermined times or time intervals, to traverse the registry to read the associated identification data identifying important user data or user files and to create automatically back-ups of those files together with corresponding restoration data.

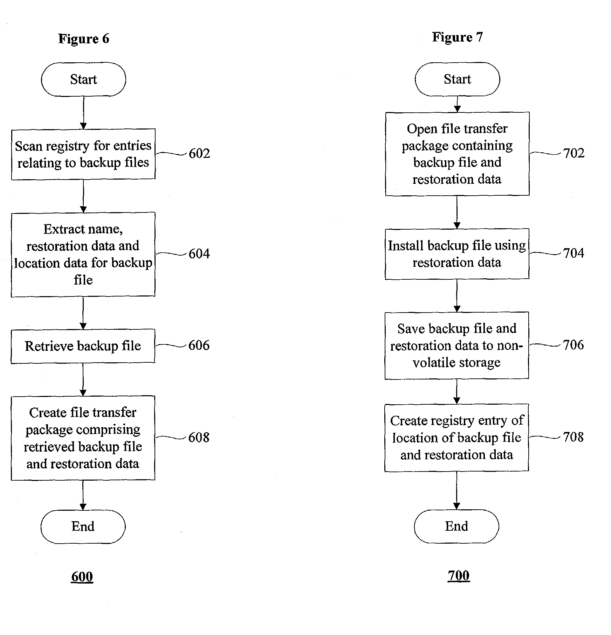

Referring to figure 6, there is shown a flowchart 600 of a process for migrating user data or user files from one computer system to another computer system. The back-up and restoration software 114 scans the registry for entries relating to user data or back-up files at step 602. For each file found, or for selected files of the files found, the name and location of the user data or back-up file together with the restoration data is identified or extracted, at step 604, and retrieved, at step at 606, from the HDD 116. A transfer package is created, at step 608, containing the retrieved back-up file and restoration data. The newly created transfer package can be used by the back-up and restoration software 114 on a new computer (not shown) to install the user data or user files within the file system of that new computer.

Embodiments can be realised in which the registry is traversed to read the identification data identifying the location within the file system of the user data or user files and to create in step 608 the transfer package using the actual user data or user files rather than using back-up copies of that data or those files. This embodiment has the advantage that the most recent versions of the user files are migrated to the new computer system.

Embodiments can be realised in which the registry comprises date and time information, which can be used to instigate backup at predetermined times or time intervals. For example, the backup and restoration software 114 might be arranged to transverse the registry to identify files that have not been backed up for a predetermined period of time such as, for example, 5 days. The software 114 may present those files to the user and seek further back-up instructions or perform an automatic back-up of all such found or selected files of the files found.

Figure 7 shows a flowchart 700 of a process for installing a transfer package on a new computer system. The transfer package is opened or invoked by the back-up and restoration software 114, at step 702, to identify or extract the back-up file and restoration data. The back-up file is installed using the restoration data, at step 704, at the appropriate location within the file system of the new computer. The back-up file and restoration data are also stored, at step 706, within or on some form of non-volatile back-up storage. The location of the back-up file stored on the non-volatile back-up storage together with the restoration data is saved within an appropriate entry within the registry of the new computer system for subsequent use in backing up the user data or migrating the user data to yet another computer system.

Although the process described in the flowchart 700 illustrates the migration of an existing back-up file, embodiments are not limited to such an arrangement. Embodiments can be realised in which user data or user files are migrated to the new computer system, that is, the transfer package contains user data or user files rather than back-up and restoration data. In such embodiments, the restoration data would identify the location within the file system of the user data or user files rather than the location of the back-up files.

Although the above embodiments have been described with reference to the registry containing location data identifying the location of a backup copy of user or software created data, they are not limited to such an arrangement. Embodiments can be realised in which the location data comprises, either alone or in conjunction with a backup copy reference, a reference to the user or software created data itself.

The above embodiments have been described with reference to creating backup copies of user data and applications. However, embodiments are not limited to such arrangements. Embodiments can be realised in which a backup of registry data or settings is created and the restoration data contains an indication of the appropriate place within the registry for the backed up registry data or settings. For example, an application might create various registry entries upon installation on a computer or the registry data or settings associated with the application might change. These registry entries may be backed up using embodiments of the present invention. The backup data may be stored in the form of a file transfer package or otherwise.

Although the above embodiments have been described with reference to the back-up copy of the user or software created data or the transfer package being stored in native form, embodiments can be realised in which the user or software created data or the transfer package is stored in a compressed form, which will reduce the burden imposed on storage requirements. The burden imposed on storage requirements might be further reduced by applying a hashing algorithm to the user or software created data or the transfer package in an attempt to ensure that a single copy of that user or software created data or transfer package is stored. This will, of course, assist in reducing the number of duplicate copies of information and, hence, might alleviate storage requirement pressures.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) might be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A data processing system comprising first non-volatile storage storing a data structure; the data structure comprising an entry having an associated identifier and data identifying the location of a file comprising a copy of at least user or software created data stored using second non-volatile storage; and first software comprising means to transverse the data structure to identify the associated identifier and means to retrieve and install the copy of the user or software created data in a predeterminable location of the first non-volatile storage; the associated identifier comprising data identifying the entry as containing the location data.

2. A data processing system comprising first non-volatile storage storing user or software created data and first software comprising means to create and store a copy of the user or software created data using second non-volatile storage and means to create within a data structure, stored using the first non-volatile storage, an entry having an associated identifier and data identifying the location of the copy of the user or software created data on the second non-volatile storage; the associated identifier comprising data identifying the entry as containing the location data.

3. A data processing system comprising first non-volatile storage storing a data structure comprising an entry associated with user or software created data and first software comprising means operable to create a data package comprising a copy of the user or software created data and restoration data identifying at least one of a current storage location of the user or software created data on the first non-volatile storage or an association with an application.

4. A data processing system comprising non-volatile storage and first software comprising means to store, using said non-volatile storage, a copy of user or software created data, originating from further non-volatile storage of a different data processing system and means to create within a data structure, stored using said non-volatile storage, an entry having an associated identifier and data identifying the location of the user or software created data on said non-volatile storage; the associated identifier comprising data identifying the entry as containing the location data.

5. A data processing system as claimed in any preceding claim in which the data structure is associated with an operating system.

6. A data processing system as claimed in claim 5 in which the data structure is an operating system registry.

7. A data processing system as claimed in claim 6 in which the operating system registry is a Windows operating system registry.

8. A data processing system as claimed in any preceding claim in which the copy of the user or software created data has associated therewith, or comprises, data identifying a location for the copy of the user or software created data.

9. A data processing system as claimed in any preceding claim in which the user or software created data is associated with an application having a respective entry in the data structure and in which the first software comprises means to associate the entry having the associated identifier and data identifying the location of the user or software created data with the application.

10. A data processing system as claimed in claim 9 in which the means to associate the entry having the associated identifier and data identifying the location of the user or software created data with the application comprises means to create the entry in a subfolder of a folder associated with the application.

11. A data processing system comprising first non-volatile storage storing a data structure and user data, associated with a user application; a first application comprising code means arranged to store a copy of at least a portion of the user data using second non-volatile storage and means to create a record within the data structure containing data relating to at least the location of at least one of the user data and the copy of the at least a portion of the user data.

12. A data processing method comprising the steps of storing, within a data structure stored using first non-volatile storage, location data identifying the location of both a copy of user or software created data and restoration data associated with a predetermined location of the user or software created data; the copy of the user or software created data and the restoration data being stored using second non-volatile storage; retrieving the copy of the user or software created data and the restoration data using the location data and installing, on the first non-volatile storage, the user or software created data at the predeterminable location determined by the restoration data.

13. A data processing method comprising the steps of storing, within a data structure stored using first non-volatile storage, location data identifying the location of both a copy of user or software created data and restoration data associated with a predetermined location of the user or software created data; the copy of the user or software created data and the restoration data being stored using second non-volatile storage; retrieving the copy of the user or software created data and the restoration data using the location data and installing, on third non-volatile storage, the user or software created data at the predeterminable location determined by the restoration data.

14. A method as claimed in either of claims 12 and 14 in which the data structure is associated with an operating system.

15. A method as claimed in claim 14 in which the data structure is an operating system registry.

16. A method as claimed in claim 15 in which the operating system registry is a Windows operating system registry.

17. A computer program element comprising computer program code means to implement a system or method as claimed in any preceding claim.

18. A computer program element comprising computer readable storage storing a computer program element as claimed in claim 17.
